# FASCICULE DE BREVET EUROPEEN

(11) **EP 2 171 230 B1**
(45) Date de publication et mention de la délivrance du brevet: **30.05.2012**
(21) Numéro de dépôt: 08827700.9
(22) Date de dépôt: 25.07.2008
(51) Int. Cl.: F01N 3/20, F01N 9/00

(54) **SYSTEME DE GESTION D'UN CIRCUIT DE DISTRIBUTION D'UN REACTIF DANS UNE LIGNE D'ECHAPPEMENT**
SYSTEM ZUR VERWALTUNG EINER REAGENZIENABGABEVORRICHTUNG IN EINER ABGASLEITUNG
SYSTEM FOR MANAGING A REAGENT DISPENSING DEVICE IN AN EXHAUST LINE

(30) Priorité: 03.08.2007 FR 0756936
(43) Date de publication de la demande: 07.04.2010
(73) Titulaire: Peugeot Citroën Automobiles SA, 78140 Vélizy-Villacoublay (FR)
(72) Inventeur: SAGUE, Alain, F-78600 Maisons-Laffitte (FR); SEDILOT, Xavier, F-75015 Paris (FR)
(74) Mandataire: Ménès, Catherine
(86) Numéro de dépôt international: PCT/FR2008/051401
(87) Numéro de publication internationale: WO 2009/024701

(56) Documents cités:
- EP-A- 1 477 655
- DE-C1- 19 956 493
- DE-U1- 29 717 494
- US-A- 6 082 102
- US-A1- 2006 130 458

## Description

La présente invention concerne la gestion d'un circuit de distribution d'un réactif dans une ligne d'échappement.

Les polluants issus de la combustion d'un moteur de véhicule automobile que celui-ci soit un moteur Diesel ou essence, sont majoritairement des hydrocarbures imbrûlés HC, des oxydes d'azote (monoxyde d'azote NO et dioxyde d'azote NO2, plus généralement englobés sous la dénomination de NOx), des oxydes de carbone (monoxyde de carbone CO) et dans le cas des moteurs Diesel et des moteurs à injection directe à essence fonctionnant en mélange pauvre, des particules solides carbonées.

Les systèmes d'injection directe du carburant et la réintroduction partielle des gaz d'échappement dans le moteur permettent de réduire la formation de certains polluants dans la chambre même de combustion mais des systèmes de post-traitement des gaz d'échappement sont néanmoins indispensables pour satisfaire des normes environnementales de plus en plus sévères.

Pour l'essentiel, sur les véhicules commerciaux, le traitement des gaz d'échappement d'un moteur à combustion interne s'est limité jusqu'à présent essentiellement à l'utilisation de pots catalytiques pour les moteurs à essence et à l'utilisation de filtres à particules pour les moteurs diesel. Les pots catalytiques sont très efficaces pour réduire les émissions d'hydrocarbures imbrûlés (HC) et de monoxyde de carbone ; les filtres à particules sont très efficaces pour le stockage et la destruction des émissions de particules carbonées. Pour contrôler les émissions de NOx, on emploie couramment sur les moteurs à essence des catalyseurs dits 3 voies, mais ce type de catalyseur perd pratiquement toute efficacité si le mélange air-carburant est pauvre, comme il est de règle avec les moteurs diesel.

Pour ces derniers, on a de ce fait développé d'autres solutions parmi lesquelles figure un procédé appelé catalyse SCR (Selective Catalytic Reduction) qui a pour principe une réduction sélective des NOx en azote et eau, en présence d'un catalyseur spécifique et par l'action d'un réducteur.

La réduction s'effectue ainsi dans un milieu contenant un excès d'air comme les gaz d'échappement d'un moteur fonctionnant en mélange pauvre, le réducteur étant typiquement de l'ammoniac. Cet ammoniac peut être apporté par la décomposition chimique d'un réactif tel que l'urée, injecté dans la ligne d'échappement à partir d'un réservoir spécifique dans lequel l'urée est stockée sous la forme d'un mélange aqueux.

Pour garantir une bonne autonomie au véhicule, ce réservoir doit bien sûr être d'un volume suffisant, par exemple d'une vingtaine de litres. Comme par ailleurs il n'est pas souhaitable de le placer dans le compartiment moteur, ni au niveau de l'habitacle du véhicule, il est généralement préconisé de disposer l'unité de stockage à l'arrière du véhicule, dans ou sous le coffre, la plupart des véhicules ayant un moteur placé sous le capot avant.

Une telle disposition à l'arrière du véhicule éloigne donc beaucoup cette unité de stockage du calculateur de contrôle moteur. Or, l'injection du réactif doit être parfaitement gérée au niveau du dispositif d'injection dans la ligne d'échappement associé à l'unité de stockage, et ceci en tenant compte des conditions de roulage du véhicule ce qui suppose un lien avec le calculateur dédié au contrôle moteur.

Un grand nombre de composants électriques sont destinés à la gestion de l'injection du réactif, notamment une pompe, un capteur de pression, une électrovanne, un capteur de niveau, un capteur de température, un injecteur et des résistances de chauffage, car dans le cas de l'urée, le réactif commercialisé sous le nom de « Adblue » gèle pour des températures inférieures à -11 °C. Tous ces composants sont pilotés par un module électronique de gestion du système SCR, en relation avec les informations provenant du calculateur de contrôle moteur, soit à l'évidence un nombre élevé de connexions électriques à prévoir, en notant de plus que les éléments clefs du système sont pratiquement aussi éloignés que possible sur un véhicule.

Pour ces implantations, deux types d'architecture ont été proposés :

Selon la première de ces conceptions, on utilise le calculateur de contrôle du moteur à combustion interne pour effectuer les différentes fonctions du traitement des gaz d'échappement - ce qui évite d'utiliser un module électronique dédié pour la gestion du système SCR. Cette conception implique un élargissement assez conséquent du connecteur du calculateur de contrôle du moteur afin de pouvoir intégrer les différents signaux d'entrée et de sortie échangés avec les différents éléments du système. Le calculateur de contrôle du moteur étant situé généralement du côté du compartiment moteur d'un véhicule automobile et les moyens impliqués dans un système SCR pour le traitement des gaz d'échappement se trouvant généralement à l'arrière du véhicule automobile, cette architecture implique de nombreux faisceaux de fils électriques entre l'avant et l'arrière du véhicule, ce qui entraîne une masse supplémentaire, des coûts de système assez important, notamment les frais de développement et de fabrication du faisceau électrique lui-même et les coûts de montage non négligeables.

Selon la seconde de ces architectures possibles, comme décrit par exemple dans US 6 082 102,on utilise un calculateur spécifique réunissant les différentes fonctions de traitement des gaz d'échappement, ainsi que le pilotage de l'ensemble des différents capteurs et actionneurs du système. Le calculateur spécifique est relié au calculateur de contrôle du moteur pour échanger les informations en provenance du moteur qui sont nécessaires à la gestion de l'injection du réactif. Cette conception implique donc de développer un calculateur de contrôle spécifique pour l'injection du réactif, entraînant, outre les coûts de développement du calculateur spécifique, les coûts de montage de celui-ci et du câblage affairant ainsi que, au moins dans certain cas, les frais de modification de la carrosserie, de l'habitacle ou d'autres composants du véhicule automobile afin d'avoir un accès facile au calculateur spécifique et son emplacement etc.

Par ailleurs, il est connu de DE 297 17 494 un système de gestion d'un circuit de distribution d'un réactif dans une ligne d'échappement d'un moteur, ce circuit comportant un réservoir, des moyens d'injection, des moyens de chauffage du réactif, des capteurs de température et de niveau de remplissage et des actionneurs de commande des moyens d'injection, pilotés par une unité de calcul en fonction de paramètres du moteur déterminés par une unité de contrôle moteur. Dans ce système, l'unité de calcul est intégrée à l'unité de contrôle moteur et le système comporte une interface numérique/analogique pour le traitement des signaux analogiques des capteurs et des actionneurs, implantée à proximité du réservoir et raccordée à l'unité de contrôle moteur par une liaison numérique multiplexée. Dans ce document, les actionneurs de commande des moyens de conditionnement sont pilotés par une unité de calcul intégrée à une unité de contrôle dans le réservoir en fonction de l'état du circuit de distribution et du réactif.

Le but de l'invention est de proposer une conception simple et, en conséquence, la moins coûteuse en termes de frais de développement et de montage.

Le but de l'invention est atteint avec un système de gestion d'un circuit de distribution d'un réactif dans une ligne d'échappement d'un moteur, ledit circuit comportant un réservoir, des moyens d'injection comportant une pompe doseuse et un injecteur pour les besoins quantitatifs en réactifs,, des moyens de conditionnement du réactif, des capteurs propres à déterminer des paramètres représentatifs de l'état du circuit de distribution et du réactif, et des actionneurs de commande des moyens de conditionnement et d'injection, pilotés par une unité de calcul en fonction de l'état du circuit de distribution, de l'état du réactif et de paramètres du moteur déterminés par une unité de contrôle moteur.

Selon l'invention, l'unité de calcul du système de gestion est intégrée à l'unité de contrôle moteur et en ce que le système comporte une interface numérique/analogique pour le traitement des signaux analogiques des capteurs et des actionneurs de commande des moyens de conditionnement et d'injection, implantée à proximité du réservoir de réactif et raccordée à l'unité de contrôle moteur par une liaison numérique multiplexée.

Ainsi, le système de gestion selon l'invention permet d'utiliser un seul calculateur, l'unité de contrôle moteur, tout en n'ayant qu'un seul faisceau de transmission, la liaison numérique multiplexée, l'interface numérique/analogique au niveau du circuit de distribution se limitant à un rôle d'esclave piloté par le contrôle moteur. Cette architecture est tout particulièrement avantageuse pour un système de distribution éloigné du calculateur de contrôle moteur.

Le dispositif de l'invention comprend différents moyens dédiés aux différentes fonctions du dispositif de traitement qui forment une sorte d'interface électronique et des moyens mécaniques. L'interface électronique reçoit du calculateur de contrôle du moteur des signaux de commande des actionneurs mécaniques et génère en conséquence des signaux électriques de pilotage de ces actionneurs. Par ailleurs, l'interface électronique effectue l'acquisition des signaux analogiques venant des différents capteurs et des informations de diagnostic des différents capteurs et actionneurs et renvoie au calculateur de contrôle du moteur des informations numériques représentatives des valeurs mesurées par les capteurs et des états de diagnostic des différents capteurs et actionneurs.

Toutes les stratégies de gestion du dispositif de traitement selon l'invention étant réalisées avantageusement par un logiciel spécifique qui est intégré dans celui du calculateur du moteur, l'interface électronique du dispositif de l'invention remplit simplement un rôle d'esclave piloté par ce contrôle du moteur, ce qui permet bien de s'affranchir de la nécessité d'embarquer un second calculateur tout en permettant néanmoins de supprimer une multitude de faisceaux électriques.

Grâce à cette conception du dispositif de l'invention, la connexion entre les différents éléments contribuant au traitement des gaz d'échappement est fortement simplifiée.

Par ailleurs, la conception du dispositif de l'invention simplifie l'intégration du traitement des gaz d'échappement dans les différents éléments du véhicule automobile par l'absence d'un calculateur supplémentaire et par une limitation du nombre de fils électriques supplémentaires entre les différents organes électriques et mécaniques, ce qui représente des gains non négligeables en termes de coûts, de masse, de qualité et de fiabilité par rapport à d'autres conceptions.

Selon différents modes de réalisation possibles, la présente invention concerne également les caractéristiques ci-après considérées isolément ou selon toutes combinaisons techniquement possibles :
- la liaison multiplexée est dédiée au circuit de distribution du réactif ;
- la liaison numérique multiplexée est un réseau CAN ;
- le système de distribution comporte au moins un capteur de la température du réactif dans le réservoir ;
- les moyens de conditionnement du réactif comportent des moyens de chauffage ;

Le but de l'invention est également atteint avec un véhicule automobile comprenant un système de gestion selon l'invention dont le réservoir est implanté dans ou à proximité du coffre à bagages du véhicule.

D'autres caractéristiques et avantages de la présente invention ressortiront de la description d'un mode de réalisation du dispositif de l'invention faite ci-après en référence à la figure unique.

La figure unique annexée représente un schéma de principe d'un système de gestion d'un circuit de distribution d'un réactif dans une ligne d'échappement d'un moteur à combustion interne selon un mode de réalisation préféré de l'invention.

Le circuit de distribution comprend un réservoir 1 d'un réactif destiné à être injecté, de manière dosée, dans les gaz d'échappement. Pour une réduction des NOx par catalyse SCR, ce réservoir pourra avoir un volume de l'ordre de 25 litres, soit environ celui d'une roue, et doit être disposé éloigné de la zone sous capot (zone moteur) par exemple dans une zone B, à proximité du coffre à bagages ou dans celui-ci.

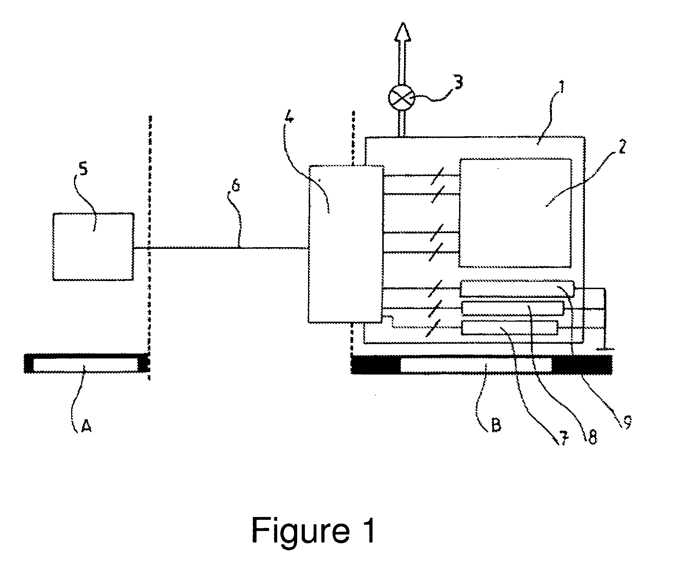

Le circuit de distribution comporte des moyens d'injection 3 conformés pour pouvoir prélever dans le réservoir 1, une quantité du réactif et l'injecter dans les gaz d'échappement. A cet effet, les moyens d'injection 3 comportent par exemple une pompe doseuse commandée en fonction des besoins en pression dans le circuit d'injection et un injecteur pour les besoins quantitatifs en réactif. Dans la figure 1, la flèche partant de la pompe 3 symbolise l'envoi d'une portion de réactif vers l'endroit où le réactif est injecté dans les gaz d'échappement.

Comme indiqué précédemment, le réactif à base d'urée gèle vers la température de -11 °C, le circuit de distribution comporte donc un certain nombre de moyens de conditionnement du réactif en différents points, par exemple un dispositif de chauffage (8) pour chauffer le réactif dans le réservoir et des dispositifs de chauffage auxiliaire pour chauffer la canalisation entre le réservoir (9) et le point d'injection dans la ligne d'échappement et/ou pour chauffer la pompe (7). Des capteurs de température sont utilisés pour déterminer les besoins de chauffage.

Le circuit de distribution va typiquement comporter d'autres capteurs comme par exemple un capteur de niveau du réactif dans le réservoir et un capteur de pression, l'ensemble des capteurs étant indiqué sur la figure 1 par la référence 2.

Par ailleurs, la pompe de distribution et l'injecteur dosant précisément la quantité de réactif injectée, sont munis d'actionneurs spécifiques bien connus de l'homme de l'art.

Tous ces capteurs et actionneurs opèrent normalement dans un mode analogique et les signaux reçus des capteurs sont convertis en signaux numériques par une interface électronique 4, disposée par exemple sur le réservoir. Cette interface électronique est par ailleurs destinée à convertir des signaux numériques en signaux analogiques destinés aux différents actionneurs.

L'interface 4 est reliée au calculateur 5 du moteur par une liaison numérique 6 se présentant sous la forme d'une liaison multiplexée. L'ensemble des signaux acquis au niveau du système de distribution peut ainsi être transmis au calculateur moteur, ou plus exactement à un module de celui-ci adapté pour leur traitement, traitement effectué par ailleurs en fonction de certains paramètres moteurs connus du calculateur moteur, paramètres tels que par exemple la quantité de carburant injectée, la quantité d'air frais et de gaz recirculés admise dans les cylindres, le régime moteur, le couple demandé, etc..., en d'autres termes une série de paramètres à partir desquels on peut estimer la composition des gaz d'échappement, et donc l'éventuel besoin d'un traitement de ceux-ci, en se basant notamment sur des cartographies établies à partir de multiples essais réalisés sur banc-moteurs pendant lesquels les émissions de polluants ont pu être mesurées.

aussi le fonctionnement de chauffage de pompe 7, chauffage de réservoir 8 et chauffage de canalisation 9 nécessaires au bon conditionnement du réactif.

Selon l'invention, c'est donc bien au niveau du calculateur moteur que le traitement proprement dit des informations a lieu. Le calculateur moteur va en retour renvoyer - via la liaison multiplexée unique - vers l'interface numérique des signaux destinés aux différents actionneurs du système, signaux numériques convertis en signaux analogiques en tant que de besoin par cette interface.

## Revendications

1. Système de gestion d'un circuit de distribution d'un réactif dans une ligne d'échappement d'un moteur, ledit circuit comportant un réservoir (1), des moyens d'injection (3) comportant une pompe doseuse et un injecteur pour les besoins quantitatifs en réactifs, des moyens de conditionnement du réactif, des capteurs propres à déterminer des paramètres représentatifs de l'état du circuit de distribution et du réactif, et des actionneurs de commande des moyens de conditionnement et d'injection, pilotés par une unité de calcul en fonction de l'état du circuit de distribution et du réactif et de paramètres du moteur déterminés par une unité de contrôle moteur (5), **caractérisé en ce que** l'unité de calcul est intégrée à l'unité de contrôle moteur (5) et **en ce que** le système comporte une interface numérique/analogique (4) pour le traitement des signaux analogiques des capteurs (2) et des actionneurs (3, 7,8,9) de commande des moyens de conditionnement et d'injection, implantée à proximité du réservoir (1) et raccordée à l'unité de contrôle moteur par une liaison numérique multiplexée (6).

2. Système selon la revendication 1, **caractérisé en ce que** ladite liaison est dédiée au circuit de distribution du réactif.

3. Système selon la revendication 1 ou la revendication 2, caractérisé en ce ladite liaison numérique multiplexée est un réseau CAN.

4. Système selon l'une des revendications précédentes, **caractérisé en ce que** ledit réactif est un réducteur de NOx.

5. Système selon l'une des revendications précédentes, **caractérisé en ce qu'**il comporte au moins un capteur de la température du réactif dans le réservoir.

6. Système selon l'une des revendications précédentes, **caractérisé en ce que** les moyens de conditionnement du réactif comportent des moyens de chauffage.

7. Véhicule automobile comportant un moteur implanté dans un compartiment moteur et un système de gestion selon l'une quelconque des revendications 1 à 6, **caractérisé en ce que** le réservoir de réactif est implanté dans ou à proximité du coffre à bagages du véhicule.

## Claims

1. System for controlling a circuit for distributing reagent in an exhaust line of an engine, said circuit comprising a tank (1), injection means (3) comprising a dosing pump and an injector for the required quantities of reagent, reagent conditioning means, sensors suitable for determining parameters representing the state of the dispensing circuit and of the reagent, and actuators for controlling the conditioning means and the injection means, controlled by a calculation unit as a function of the state of the distribution circuit and of the reagent and of engine parameters as determined by an engine control unit (5), **characterised in that** the calculation unit is integrated into the engine control unit (5) and **in that** the system comprises a digital-analogue interface (4) for processing the analogue signals of the sensors (2) and of the actuators (3, 7, 8, 9) for controlling the conditioning means and the injection means, the interface being installed in the proximity of tank (1) and connected to the engine control unit via a multiplexed digital connection (6).

2. System according to claim 1, **characterised in that** said connection is dedicated to the reagent distribution circuit.

3. System according to claim 1 or claim 2, **characterised in that** said multiplexed digital connection is a CAN network.

4. System according to any one of the preceding claims, **characterised in that** said reagent is a NOx reducing agent.

5. System according to any one of the preceding claims, **characterised in that** it comprises at least one temperature sensor for the reagent in the tank.

6. System according to any one of the preceding claims, **characterised in that** the reagent conditioning means comprises a heating means.

7. Automotive vehicle comprising an engine installed in an engine compartment and a control system according to any one of claims 1 to 6, **characterised in that** the reagent tank is installed inside, or in the proximity of, the boot of the vehicle.

## Patentansprüche

1. System zur Verwaltung eines Kreislaufs zur Abgabe eines Reagenz in eine Abgasleitung eines Motors, wobei der Kreislauf einen Behälter (1) aufweist, Einspritzmittel (3), die eine Dosierpumpe und eine Einspritzvorrichtung für den mengenmäßigen Bedarf an dem Reagenz aufweisen, Mittel zur Behandlung des Reagenzes, Sensoren, die sich zum Bestimmen von Parametern eignen, die den Zustand des Abgabekreislaufs und des Reagenzes wiedergeben, und Stellglieder zur Steuerung der Behandlungs- und Einspritzmittel, die von einer Recheneinheit in Abhängigkeit vom Zustand des Abgabekreislaufs und des Reagenzes und von Motorparametern gesteuert werden, die von einer Motorsteuereinheit (5) bestimmt werden, **dadurch gekennzeichnet, dass** die Recheneinheit in die Motorsteuereinheit (5) integriert ist und dadurch, dass das System eine Digital-Analog-Schnittstelle (4) für die Verarbeitung der analogen Signale der Sensoren (2) und der Stellglieder (3, 7, 8, 9) zur Steuerung der Behandlungs- und Einspritzmittel aufweist, die in der Nähe des Behälters (1) eingebaut und an die Motorsteuereinheit über eine digitale Multiplexverbindung (6) angeschlossen ist.

2. System nach Anspruch 1, **dadurch gekennzeichnet, dass** die Verbindung speziell für den Reagenzabgabekreislauf vorgesehen ist.

3. System nach Anspruch 1 oder Anspruch 2, **dadurch gekennzeichnet, dass** die digitale Multiplexverbindung ein CAN-Netz ist.

4. System nach einem der vorhergehenden Ansprüche, **dadurch gekennzeichnet, dass** das Reagenz ein NOₓ-Reduktionsmittel ist.

5. System nach einem der vorhergehenden Ansprüche, **dadurch gekennzeichnet, dass** es mindestens einen Temperatursensor für das Reagenz in dem Behälter aufweist.

6. System nach einem der vorhergehenden Ansprüche, **dadurch gekennzeichnet, dass** die Behandlungsmittel für das Reagenz Heizmittel aufweisen.

7. Kraftfahrzeug, das einen Motor, der in einem Motorraum eingebaut ist, und ein Verwaltungssystem nach einem der Ansprüche 1 bis 6 aufweist, **dadurch gekennzeichnet, dass** der Reagenzbehälter im Kofferraum oder in der Nähe des Kofferraums des Fahrzeugs eingebaut ist.
